# EUROPEAN PATENT APPLICATION

(11) **EP 4 005 444 A1**
(43) Date of publication of application: **01.06.2022**
(21) Application number: 20848371.9
(22) Date of filing: 28.07.2020
(51) Int. Cl.: A47J 43/046, A47J 43/07, B02C 18/12, B02C 18/18

(54) **DETACHABLE CUTTER ASSEMBLY AND FOOD MACHINE**

(30) Priority: 29.07.2019 CN 201921201591 U
(71) Applicant: Zhejiang Shaoxing Supor Domestic Electrical Appliance Co., Ltd., Shaoxing, Zhejiang 312017 (CN)
(72) Inventor: YANG, Baobin, Shaoxing, Zhejiang 312017 (CN)
(74) Representative: LLR
(86) International application number: PCT/CN2020/105267
(87) International publication number: WO 2021/018151

(57) **Abstract**

A detachable cutter assembly 3 and a food processor 100 are provided, the cutter assembly comprising a base 1 and a pot assembled to the base 1, a detachable cutter assembly 3 being provided inside the pot 2 and comprising a cutter support 30, a cutter shaft 31 assembled to the cutter support 30, and a blade assembly 32 detachably assembled to the cutter shaft 31, the blade assembly 32 comprising a fixing member 33 detachably assembled with the cutter shaft 31 and a blade 34 provided on the fixing member 33, a first sealing member 35 being provided between the cutter shaft 31 and the fixing member 33, the first sealing member 35 being sealingly assembled to the pot 2 by interference fitting. Since the detachable blade assembly 3 inside the food processor 100 are provided with detachably assembled cutter shaft 30 and blade assembly 32, the user only needs to detach and clean the blade assembly 32, which not only can ensure sanitary requirements for the use of the food processor 100 but also makes cleaning convenient.

## Description

The present invention relates to the field of small household appliances, and in particular relates to a detachable cutter assembly and a food processor.

Currently, in a high-end configuration of a food processor, a crushing assembly is usually detachable so as to facilitate its cleaning. However, in reality, most detachable cutters are detachable with its cutter shaft as a whole, which makes it inconvenient to detach and reattach. It may also cause certain hygiene risks because when the stirring blade is not detachable, dirt and food residual may easily be retained at its base and, if not cleaned, easily become mouldy. Also, when food is being poured out, some detachable cutters will be brought out, which, although facilitating cleaning, causes safety risks.

The present invention provides a detachable cutter assembly and a food processor.

According to a first aspect of the present invention, a detachable cutter assembly is provided, comprising a cutter support, a cutter shaft assembled to the cutter support, and a blade assembly detachably assembled to the cutter shaft, the blade assembly comprising a fixing member detachably assembled with the cutter shaft and a blade provided on the fixing member, a first sealing member being provided between the cutter shaft and the fixing member. Since the blade assembly is detachably assembled to the cutter shaft, cleaning of the blade assembly can be facilitated. Thanks to the first sealing member provided between the cutter shaft and the fixing member, food materials and liquid can be prevented from accumulating at the base of the cutter shaft, making cleaning less burdensome.

Further, the cutter shaft comprises a body, a first assembling part located at a top end of the body, and a second assembling part located at a bottom end of the body, a supporting part being provided at the junction between the first assembling part and the body, the first assembling part being provided with a plot, the fixing member being provided with an assembling cavity for receiving the first assembling part, a side wall of the assembling cavity being provided with a groove adapted to the plot. The detachable assembly of the blade assembly to the cutter shaft is achieved by the cooperation between the plot and the groove, providing a simple structure and easy use.

Further, the groove comprises an opening disposed vertically and a receiving portion communicating with the opening and disposed circumferentially, an assembly between the cutter shaft and the blade assembly being achieved when the plot enters the groove via the opening and the fixing member is rotated along the direction provided by the receiving portion. Since the groove comprises two parts, i.e., the opening and the receiving portion, the assembly and detachment of the plot and the groove are facilitated.

Further, the groove comprises a stepped part provided on a side wall of the assembling cavity, a pressing block being assembled to the stepped part, a first end face of the pressing block forming a side wall of the opening, and a second end face of the pressing block forming a top wall of the receiving portion, a third end face of the pressing block being located on the same arc surface as the side wall of the assembling cavity. Thus, the groove is formed by the pressing block, which simplifies the structure of the fixing member and facilitates its production.

Further, the cutter shaft comprises a body, a first assembling part located at a top end of the body, and a second assembling part located at a bottom end of the body, a supporting part being provided at the junction between the first assembling part and the body, the first assembling part being provided with a groove, the fixing member being provided with a plot to be received in the groove. The detachable assembly of the blade assembly to the cutter shaft is achieved by the cooperation between the plot and the groove, providing a simple structure and easy use. The supporting part can limit the position of assembly between the fixing member and the cutter shaft.

Further, the groove comprises an opening disposed vertically and a receiving portion communicating with the opening and disposed circumferentially, a top wall of the receiving portion being provided with an anti-disengagement protrusion so as to prevent the plot from disengaging from the receiving portion. The anti-disengagement protrusion allows to prevent the blade assembly from being disengaged from the groove during the high speed rotation, thereby ensuring its safety.

Further, the blade comprises a body part and a first blade and a second blade extending opposite each other from the body part, the first blade being provided with a first cutting edge, the second blade being provided with a second cutting edge, the first cutting edge and the second cutting edge being arranged in opposite directions, the fixing member being provided with a fitting groove that accommodates the body part. The fitting groove allows a good position limiting of the blade, which is prevented from skidding relative to the fixing member in the course of high-speed rotation.

Further, an assembling hole is provided at the center of the cutter support, and a second sealing member is provided between the body of the cutter shaft and the assembling hole, a bearing located below the second sealing member being provided inside the assembling hole for limiting the position of the cutter shaft. By providing the second sealing member, food materials are prevented from entering the cutter shaft and causing pollution and damage.

According to a second aspect of the present invention, a food processor is provided, comprising a base and a pot assembled to the base, the pot being provided inside with the detachable cutter assembly as described above, the first sealing member being sealingly assembled to the pot by interference fitting. The first sealing member being sealingly assembled to the pot by interference fitting effectively prevents food materials from entering the base via the detachable cutter assembly, ensuring the food processor's safety and use hygiene.

Further, the base is provided with an electric motor and a gear assembly drivingly connected with the electric motor, the gear assembly comprising a first gear connected with the electric motor and a second gear drivingly connected with the detachable cutter assembly, the first gear and the second gear being connected by means of a connecting belt, the second gear being provided to be coaxial with the cutter shaft. The rotation speed of the electric motor can be reduced by means of the gear assembly, so that the blade assembly may receive a relatively high torque so as to accomplish different functions.

As it can be seen from the technical solutions above, by providing the detachably assembled cutter support and blade assembly in the food processor, the user only needs to detach and clean the blade assembly when cleaning the cutter, which not only ensures the sanitary requirements for the use of the food processor, but also makes cleaning convenient.

It should be understood that the general description above and the detailed description below are merely illustrative and made by way of example and do not limit the scope of the present invention.

In order to describe more clearly the technical solutions in the embodiments of the present invention, the accompanying drawings to be used in describing the embodiments below are briefly described. Obviously, the accompanying drawings described below merely illustrate some embodiments of the present invention. For an ordinary person skilled in the art, other drawings can be obtained based on those accompanying drawings without creative labour.
Figure 1 is a schematic exploded view in perspective of a food processor of an embodiment of the present invention;
Figure 2 is a schematic sectional view in perspective of an assembled food processor of an embodiment of the present invention;
Figure 3 is a schematic assembled sectional view in perspective from another angle of a food processor of an embodiment of the present invention;
Figure 4 is a schematic assembled view in perspective of a detachable cutter assembly of an embodiment of the present invention;
Figure 5 is a schematic exploded view in perspective of a detachable cutter assembly of an embodiment of the present invention;
Figure 6 is a schematic assembled view of a fixing member and a blade of an embodiment of the present invention;
Figure 7 is a schematic sectional view in perspective of an assembled detachable cutter assembly of an embodiment of the present invention;
Figure 8 is a schematic sectional view in perspective from another angle of an assembled detachable cutter assembly of an embodiment of the present invention;
Figure 9 is a schematic partially exploded view of a detachable cutter assembly of another embodiment of the present invention;
Figure 10 is a schematic assembled view of a fixing member and a blade of another embodiment of the present invention;
Figure 11 is a schematic assembled view of a cutter shaft and a cutter support of another embodiment of the present invention;
Figure 12 is a schematic assembled sectional view of a detachable cutter assembly of another embodiment of the present invention.

**References:**

| | | | | | |
|---|---|---|---|---|---|
| Food processor | 100 | | | | |
| Base | 1 | Electric motor | 10 | Gear set | 11 |
| First gear | 12 | Second gear | 13 | | |
| Pot | 2 | | | | |
| Detachable cutter assembly | 3 | Cutter support | 30 | Assembling hole | 301 |
| Nut | 302 | | | | |
| Cutter shaft | 31 | Body | 310 | First assembling part | 311 |
| Plot | 3110 | Second assembling part | 312 | Supporting part | 313 |
| Blade assembly | 32 | Fixing member | 33 | | |
| Assembling cavity | 330 | Groove | 331 | Opening | 332 |
| Receiving portion | 333 | Anti-disengagement protrusion | 3330 | Stepped | part 334 |
| | | | | | |
| Fitting groove | 335 | Blade | 34 | Body part | 340 |
| First blade | 341 | Second blade | 342 | First sealing member | 35 |
| Pressing block | 36 | First end face | 361 | Second end face | 362 |
| Third end face | 363 | Second sealing member | 37 | Bearing | 38 |
| First coupler | 4 | Second coupler | 5 | | |

Exemplary embodiments will be described in detail here, and examples thereof are shown in the accompanying drawings. When the following description refers to the drawings, unless otherwise indicated, the same reference number in different drawings designates the same or similar elements. The modes of realization described in the following exemplary embodiments do not represent all the modes of realization consistent with the present invention. On the contrary, they are merely examples of devices and methods consistent with some aspects of the present invention as defined by the appended claims.

The terms used in the present invention are only for the purpose of describing specific embodiments and are not intended to limit the present invention. The singular forms such as "a", "said" and "the" used in the present invention and the appended claims are also intended to include plural forms, unless the context clearly indicates other meanings. It should also be understood that the term "and/or" as used herein refers to and includes any or all possible combinations of one or more associated listed items.

It should be understood that although the terms first, second, third, etc. may be used in the present application to describe various information, the information should not be limited to these terms. These terms are only used to distinguish the same type of information from each other. For example, without departing from the scope of the present invention, first information may also be referred to as second information, and similarly, second information may also be referred to as first information. Depending on the context, the word "if" as used herein can be interpreted as "when" or "during" or "in response to determining that".

The following describes in detail a food processor of the present invention in reference to the accompanying drawings. In the absence of conflict, the following embodiments and features in the modes of realization can be combined with each other.

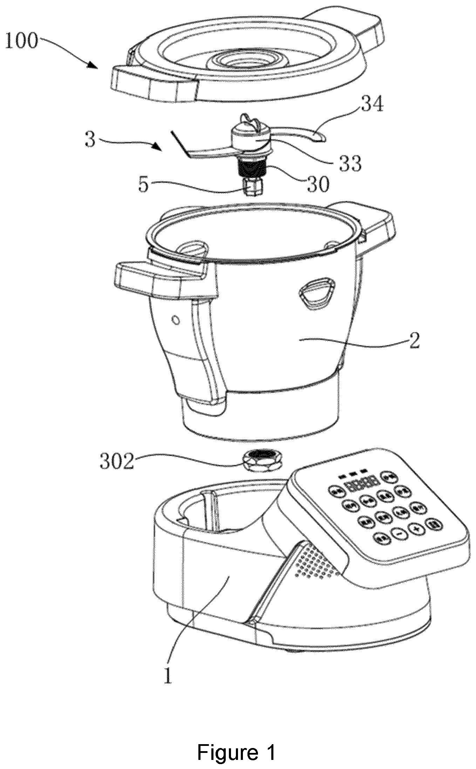

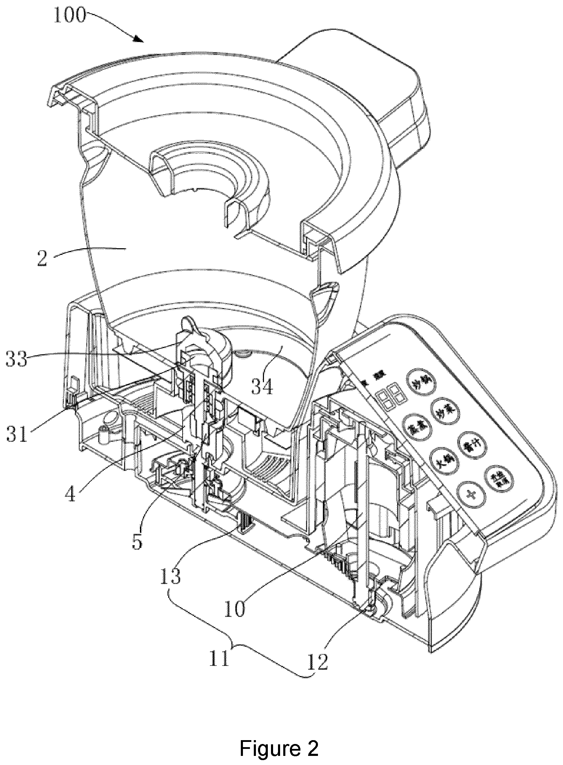

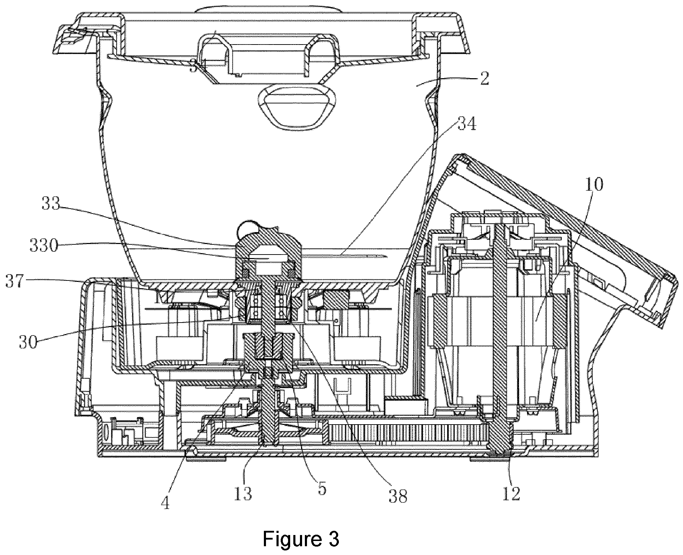

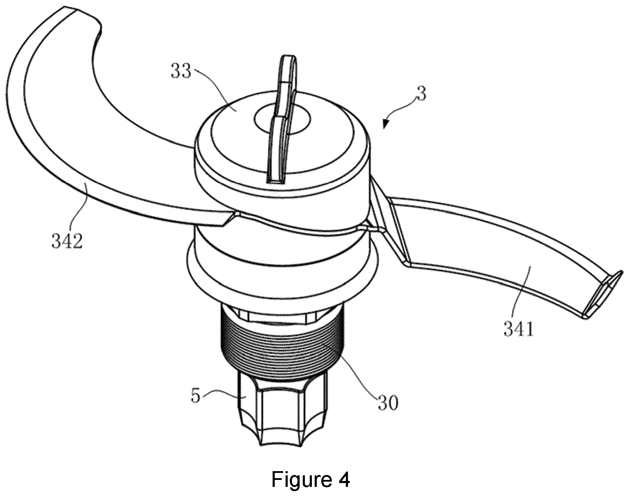

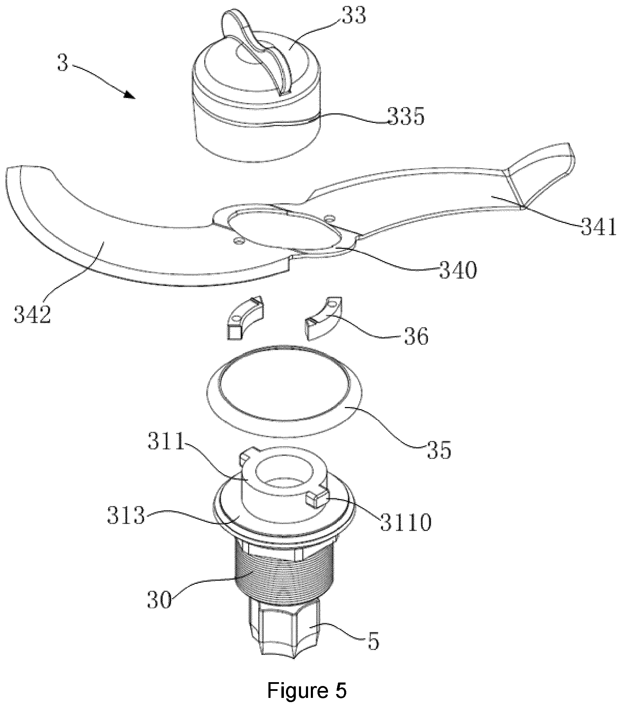

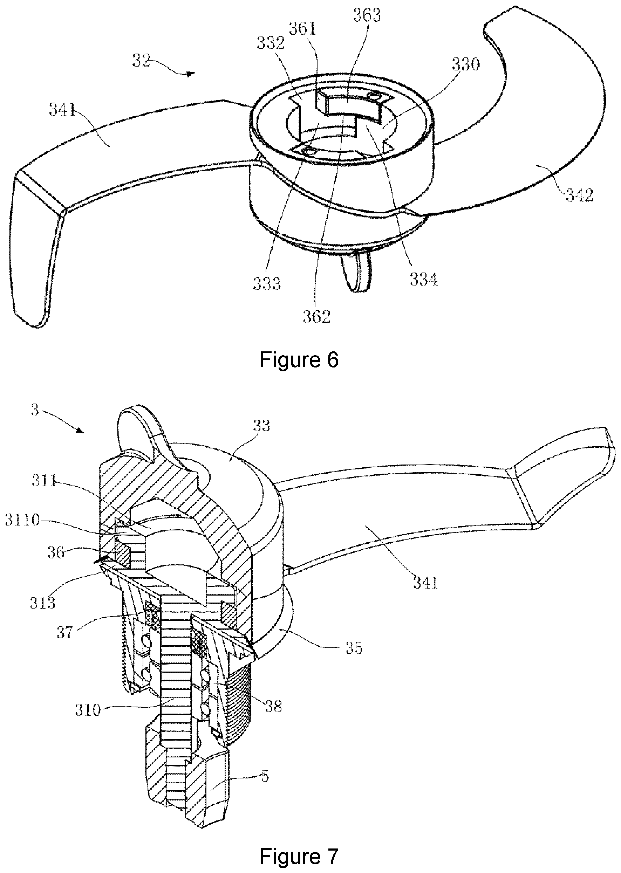

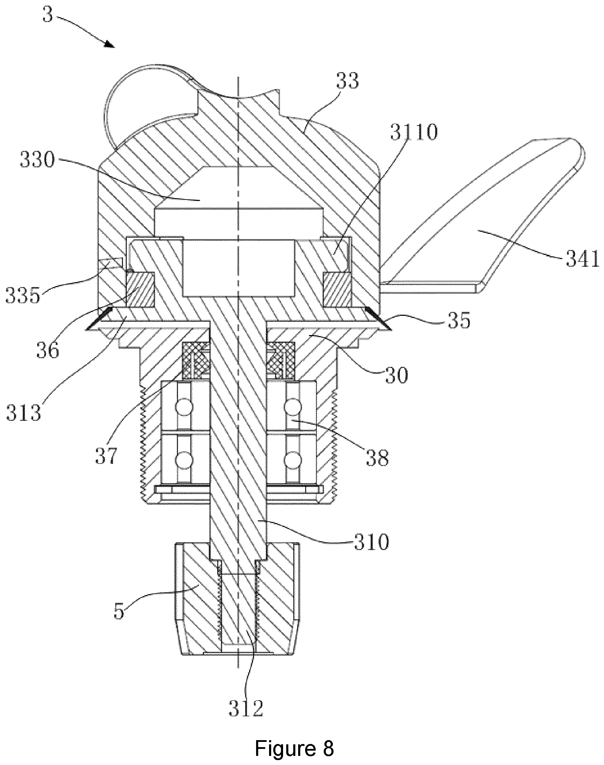

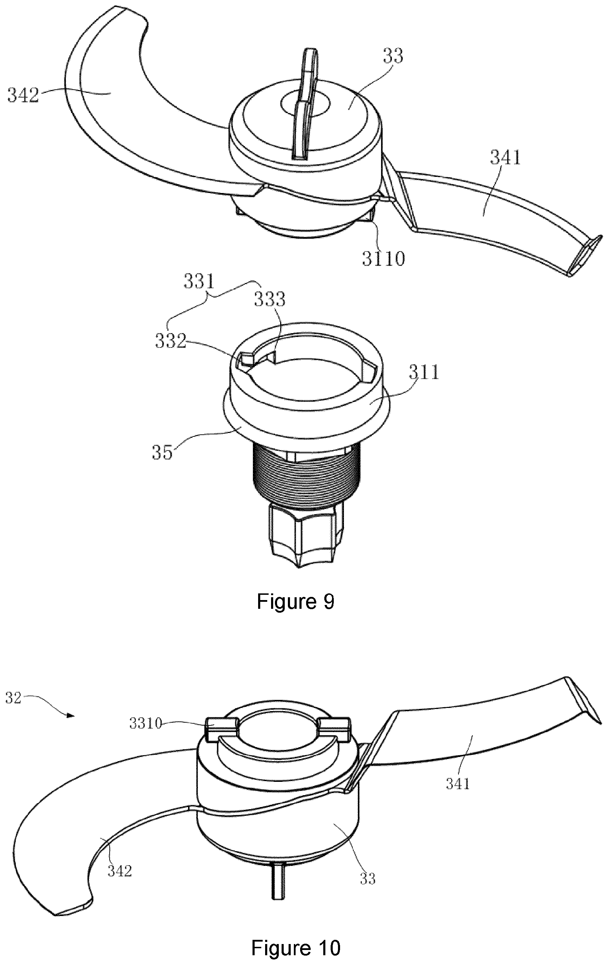

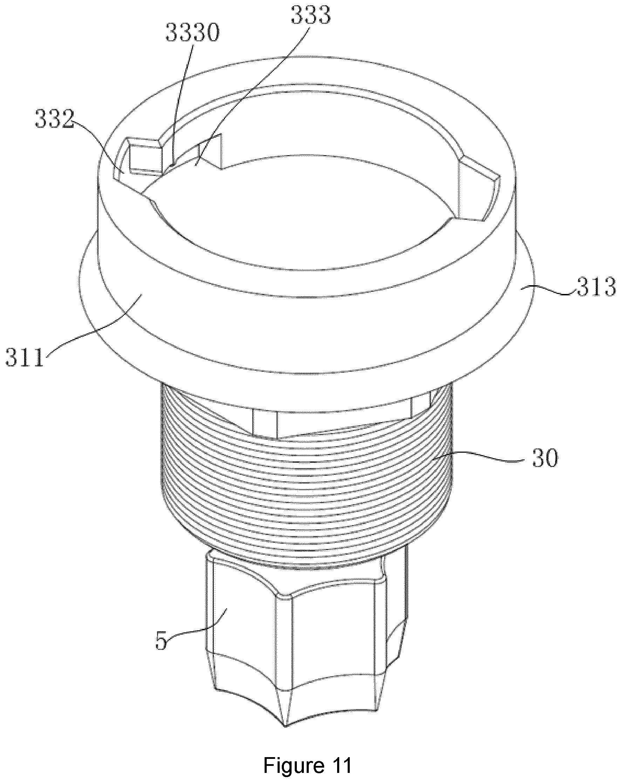

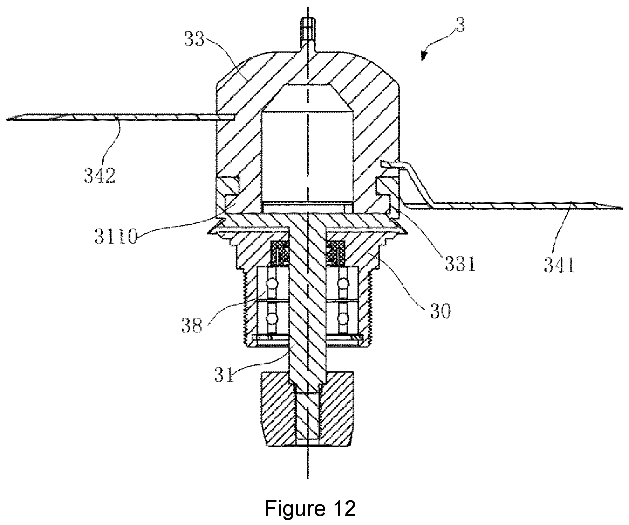

In reference to Figures 1 to 12, a food processor 100 comprises a base 1 and a pot 2 assembled to the base 1. A detachable cutter assembly 3 is provided inside the pot 2.

An electric motor 10 and a gear assembly 11 drivingly connected with the electric motor 10 are provided inside the base 1. The gear assembly 11 comprises a first gear 12 connected with the electric motor 10 and a second gear 13 drivingly connected with the detachable cutter assembly 3. The first gear 12 and the second gear 13 are connected by means of a connecting belt.

The detachable cutter assembly 3 comprises a cutter support 30, a cutter shaft 31 assembled to the cutter support 30, and a blade assembly 32 detachably assembled to the cutter shaft 31. The blade assembly 32 comprises a fixing member 33 detachably assembled with the cutter shaft 31 and a blade 34 provided on the fixing member 33. A first sealing member 35 is provided between the cutter shaft 31 and the fixing member 33. The cutter support 30 is fixedly assembled to the pot by means of a fastening nut 302, and the first sealing member 35 is sealingly assembled to the pot 2 by interference fitting. The interference fitting between the first sealing member 35 and the pot 2 allows to effectively prevent food materials from entering the base 1 via the detachable cutter assembly 3, thereby ensuring the safety and utilization hygiene of the food processor 100.

The rotating speed of the electric motor 10 can be reduced by means of the gear set 11, so that the blade assembly 32 receives a relatively high torque in order to accomplish different functions. Since the blade assembly 32 and the cutter shaft 31 are detachably assembled, the cleaning of the blade assembly 32 can be facilitated. The first sealing member 35 arranged between the cutter shaft 31 and the fixing member 33 can prevent food materials and liquid from accumulating at the base of the cutter shaft 31, making cleaning less burdensome. Conventional detachable cutters are mostly detachable with its cutter shaft as a whole, or inconvenient to detach and reattach. More specifically, a special tool is usually needed to detach a detachable cutter after it is assembled to a pot or bowl, and this type of detachability only means that the detachable cutter and the bowl or pot are of a two-piece structure and that during use, the detachable cutter cannot really be separately detached for cleaning. In addition, dirt can easily accumulate below the stirring cutter, which, if not cleaned properly, easily gets mouldy and makes utilization unsanitary. Furthermore, for some detachable cutters, when food materials are being poured out after being stirred, the cutter is also brought out, making utilization unsafe.

Specifically, the cutter shaft 31 comprises a body 310, a first assembling part 311 located at a top end of the body 310, and a second assembling part 312 located at a bottom end of the body 310. A supporting part 313 is provided at the junction between the first assembling part 311 and the body 310. The first assembling part 311 is provided with a plot 3110. The fixing member 33 is provided with an assembling cavity 330 for receiving the first assembling part 311. A side wall of the assembling cavity 330 is provided with a groove 331 adapted to the plot 3110. The detachable assembly of the blade assembly 32 to the cutter shaft 31 is achieved by the cooperation between the plot 3110 and the groove 331, providing a simple structure and easy use. The second gear 13 is coaxial with the cutter shaft 31. The gear shaft of the second gear 13 is provided with a first coupler 4 and the second assembling part 312 of the cutter shaft 31 is provided with a second coupler 5 adapted to the first coupler 4. By the cooperation of the first coupler 4 and the second coupler 5, the coaxiality between the blade assembly 32 and the second gear 13 is ensured, thereby reducing the noise during the functioning of the food processor.

In an embodiment, the groove 331 comprises an opening 332 disposed vertically and a receiving portion 333 communicating with the opening 332 and disposed circumferentially. An assembly between the cutter shaft 31 and the blade assembly 32 is achieved when the plot 3110 enters the groove 331 via the opening 332 and the fixing member 33 is rotated along the direction provided by the receiving portion 333. The groove 331 is designed to comprise two parts, i.e. the opening 332 and the receiving portion 333, so as to facilitate the assembly and detachment of the blade assembly and the cutter shaft.

Indeed, in order to facilitate the processing of the part, the groove 331 comprises a stepped part 334 provided on a side wall of the assembling cavity 330, a pressing block 36 being assembled to the stepped part 334. A first end face 361 of the pressing block 36 forms a side wall of the opening 332, and a second end face 362 of the pressing block 36 forms a top wall of the receiving portion 333. A third end face 363 of the pressing block 36 is located on the same arc surface as the side wall of the assembling cavity 330. With the pressing block 36 forming the groove 331, the structure of the fixing member 33 is simplified, so that its production is facilitated. The pressing block 36 is provided with a first through hole (not designated by a reference) provided vertically and the stepped part 334 is provided with a second through hole (not shown in the figures) adapted to the first through hole. The pressing block 36 is assembled to the stepped part 334 by means of a screw passing through the first through hole and the second through hole.

In another embodiment, the cutter shaft 31 comprises a body 310, a first assembling part 311 located at a top end of the body 310, and a second assembling part 312 located at a bottom end of the body 310. A supporting part 313 is provided at the junction between the first assembling part 311 and the body 310. The first assembling part 311 is provided with a groove 331, and the fixing member 33 is provided with a plot 3110 to be received in the groove 331. The detachable assembly of the blade assembly 32 to the cutter shaft 31 is achieved by the cooperation between the plot 3110 and the groove 311. The supporting part 313 can limit the position of the assembly between the fixing member 33 and the cutter shaft 31. In other words, the groove 331 and the plot 3110 are switched in the present embodiment compared to the preceding embodiment are.

The groove 331 comprises an opening 332 disposed vertically and a receiving portion 333 communicating with the opening 332 and disposed circumferentially, a top wall of the receiving portion 333 being provided with an anti-disengagement protrusion 3330 so as to prevent the plot 3110 from disengaging from the receiving portion 333. Providing the anti-disengagement protrusion 3330 can prevent the blade assembly 32 from disengaging from the groove 331 in the course of high-speed rotation, ensuring utilization safety. When the blade assembly 32 needs to be detached, the user only needs to rotate the fixing member 33 in the direction opposite to the assembly direction, which is simple to operate and facilitates its utilization. In the present application, the fixing member 33 can be rotated in the counter-clockwise direction so as to be loosened and detached from the cutter support 30, while rotation in clockwise direction of the fixing member 33 allows it to be fastened and assembled to the cutter support 30. In the embodiment described above, two grooves 331 are symmetrically provided, so that a balance of forces on the blade assembly 32 can be achieved. The number of the plots 3110 provided corresponds to the number of the grooves 331.

The blade 34 comprises a body part 340 and a first blade 341 and a second blade 342 extending from the body part 340 and opposite each other. The first blade 341 is provided with a first cutting edge and the second blade 342 is provided with a second cutting edge. The first cutting edge and the second cutting edge are arranged in opposite directions. The fixing member 33 is provided with a fitting groove 335 that accommodates the body part 340. The fitting groove 335 ensures a relatively good position limiting of the blade 34, which is thus prevented from skidding relative to the fixing member 33 in the course of high-speed rotation. In the embodiments described in the present invention, the first blade 341 and the second blade 342 are arranged at different levels in the axial direction, so as to improve the efficiency of stirring or crushing.

An assembling hole 301 is provided at the center of the cutter support 30, and a second sealing member 37 is provided between the body 310 and the assembling hole 301. A bearing 38 located below the second sealing member 37 is provided inside the assembling hole 301 for limiting the position of the cutter shaft 31. By providing the second sealing member 37, food materials are prevented from entering the cutter shaft 31 and causing pollution and damage. The bearing 38 can be a ball bearing or an oil bearing.

What has been described above are only preferred embodiments of the present invention and are not intended to limit the present invention. Any modification, equivalent replacement, improvement, etc. made within the spirit and principle of the present invention shall fall within the scope of protection of the present invention.

## Claims

1. A detachable cutter assembly, **characterized in that**, it comprises a cutter support (30), a cutter shaft (31) comprising a body (310) and assembled to the cutter support (30), and a blade assembly (32) detachably assembled on the cutter shaft (31), the blade assembly (32) comprising a fixing member (33) detachably assembled with the cutter shaft (31) and a blade (34) provided on the fixing member (33), a first sealing member (35) being provided between the cutter shaft (31) and the fixing member (33).

2. The detachable cutter assembly of claim 1, **characterized in that**, an assembling hole (301) is provided at the center of the cutter support (30), and a second sealing member (37) is provided between the body (310) of the cutter shaft (31) and the assembling hole (301), a bearing (38) located below the second sealing member (37) being provided inside the assembling hole (301) for limiting the position of the cutter shaft (31).

3. The detachable cutter assembly of claim 1 or 2, **characterized in that**, the blade (34) comprises a body part (340) and a first blade (341) and a second blade (342) extending from the body part (340) and opposite each other, the first blade (341) being provided with a first cutting edge, the second blade (342) being provided with a second cutting edge, the first cutting edge and the second cutting edge being arranged in opposite directions, the fixing member (33) being provided with a fitting groove (335) that accommodates the body part (340).

4. The detachable cutter assembly of any one of claims 1 to 3, **characterized in that**, the cutter shaft (31) comprises a first assembling part (311) located at a top end of the body (310), and a second assembling part (312) located at a bottom end of the body (310), a supporting part (313) being provided at the junction between the first assembling part (311) and the body (310), the first assembling part (311) being provided with a plot (3110), the fixing member (33) being provided with an assembling cavity (330) for receiving the first assembling part (311), a side wall of the assembling cavity (330) being provided with a groove (331) adapted to the plot (3110).

5. The detachable cutter assembly of claim 4, **characterized in that**, the groove (331) comprises an opening (332) disposed vertically and a receiving part (333) communicating with the opening (332) and disposed circumferentially, an assembly between the cutter shaft (31) and the blade assembly (32) being achieved when the plot (3110) enters the groove (331) via the opening (332) and the fixing member (33) is rotated along the direction provided by the receiving part (333).

6. The detachable cutter assembly of claim 5, **characterized in that**, the groove (331) comprises a stepped part (334) provided on a side wall of the assembling cavity (330), a pressing block (36) being assembled to the stepped part (334), a first end face (361) of the pressing block (36) forming a side wall of the opening (332), and a second end face (362) of the pressing block (36) forming a top wall of the receiving part (333), a third end face (363) of the pressing block (36) being located on the same arc surface as the side wall of the assembling cavity (330).

7. The detachable cutter assembly of any one of claims 1 to 3, **characterized in that**, the cutter shaft (31) comprises a first assembling part (311) located at a top end of the body (310), and a second assembling part (312) located at a bottom end of the body (310), a supporting part (313) being provided at the junction between the first assembling part (311) and the body (310), the first assembling part (311) being provided with a groove (331), the fixing member (33) being provided with a plot (3310) to be received in the groove (331).

8. The detachable cutter assembly of claim 7, **characterized in that**, the groove (331) comprises an opening (332) disposed vertically and a receiving part (333) communicating with the opening (332) and disposed circumferentially, a top wall of the receiving part (333) being provided with an anti-disengagement protrusion (3330) so as to prevent the plot (3110) from disengaging from the receiving part (333).

9. A food processor, **characterized in that**, it comprises a base (1) and a pot (2) assembled to the base (1), the detachable cutter assembly of any one of claims 1 to 8 being provided inside the pot (2), the first sealing member (35) being sealed with the pot (2) by interference fitting.

10. The food processor of claim 9, **characterized in that**, the base (1) is provided with an electric motor (10) and a gear assembly (11) drivingly connected with the electric motor (10), the gear assembly (11) comprising a first gear (12) connected with the electric motor (10) and a second gear (13) drivingly connected with the detachable cutter assembly, the first gear (12) and the second gear (13) being connected by means of a connecting belt, the second gear (13) being coaxially arranged with the cutter shaft (31).
